# EUROPEAN PATENT APPLICATION

(11) **EP 3 165 715 A1**
(43) Date of publication of application: **10.05.2017**
(21) Application number: 16193543.2
(22) Date of filing: 12.10.2016
(51) Int. Cl.: F01D 5/18

(54) **TURBINE BLADE**

(30) Priority: 15.10.2015 US 201514884088
(71) Applicant: General Electric Company, Schenectady, NY 12345 (US)
(72) Inventor: KRUMANAKER, Matthew Lee, Cincinnati, OH Ohio 45215 (US); DOOLEY, Weston Nolan, Cincinnati, OH Ohio 45215 (US); BRASSFIELD, Steven Robert, West Chester, OH Ohio 45069 (US)
(74) Representative: Williams, Andrew Richard

(57) **Abstract**

An airfoil (78) for a gas turbine engine (10) can receive a flow of cooling fluid through a cooling circuit (120). The cooling circuit (120) is defined within the airfoil (78) comprising a supply passage (122) and a leading edge cooling passage (126), the two passages (122, 126) being in fluid communication through a plurality of impingement orifices (142) disposed within a cross-over rib (140) disposed between and at least partially defining the passages (122, 126). The cross-over rib (140) can further comprise a cross-section to provide thermal stress-relief for the cross-over rib (140).

## Description

### BACKGROUND

Turbine engines, and particularly gas or combustion turbine engines, are rotary engines that extract energy from a flow of combusted gases passing through the engine onto a multitude of rotating turbine blades. Gas turbine engines have been used for land and nautical locomotion and power generation, but are most commonly used for aeronautical applications such as for aircraft, including helicopters. In aircraft, gas turbine engines are used for propulsion of the aircraft. In terrestrial applications, turbine engines are often used for power generation.

Gas turbine engines for aircraft are designed to operate at high temperatures to maximize engine efficiency, so cooling of certain engine components, such as the high pressure turbine and the low pressure turbine, can be beneficial. Typically, cooling is accomplished by ducting cooler air from the high and/or low pressure compressors to the engine components that require cooling. Temperatures in the high pressure turbine are around 1000 °C to 2000 °C and the cooling air from the compressor is around 500 °C to 700 °C. While the compressor air is a high temperature, it is cooler relative to the turbine air, and can be used to cool the turbine.

Contemporary turbine blades generally include one or more interior cooling circuits for routing the cooling air through the blade to cool different portions of the blade, and can include dedicated cooling circuits for cooling different portions of the blade, such as the leading edge, trailing edge and tip of the blade.

### BRIEF DESCRIPTION

An airfoil for a gas turbine engine having an outer surface defining a pressure side and a suction side extending axially between a leading edge and a trailing edge and extending radially between a root and a tip. The airfoil further comprises a cooling circuit located within the airfoil comprising a supply passage extending from the root toward the tip and fluidly coupled to the dovetail inlet passage at the root, a leading edge cooling passage extending along the leading edge, a cross-over rib extending between the pressure side and the suction side to separate the supply passage form the leading edge cooling passage, and impingement orifice extending through the cross-over rib fluidly coupling the leading edge cooling passage to the supply passage. The cross-over rib has an arcuate cross-section to provide thermal stress-relief for the cross-over rib.

A turbine blade for a gas turbine engine having a turbine rotor disk comprising a dovetail having at least one cooling air inlet passage and configured to mount to the turbine rotor disk and an airfoil extending radially form the dovetail and having an outer surface defining a pressure side and a suction side extending axially between a leading edge and a trailing edge and extending radially between a root and a tip, with the root being adjacent the dovetail. The blade further comprises a cooling circuit located within the airfoil and comprising a supply passage extending from the root toward the tip and fluidly coupled to the dovetail inlet passage at the root, a leading edge cooling passage extending along the leading edge, a cross-over rib extending between the pressure side and the suction side to separate the supply passage from the leading edge cooling passage, and impingement orifices extending through the cross-over rib fluidly coupling the leading edge cooling passage to the supply passage. The cross-over rib has an arcuate cross-section to provide thermal stress-relief for the cross-over rib and a thickened portion having an increased cross-section, with at least some of the impingement orifices extending through the thickened portion.

An airfoil for a gas turbine engine, the airfoil an outer surface defining a pressure side and a suction side extending axially between a leading edge and a trailing edge and extending radially between a root and a tip. The airfoil further comprises a cooling circuit located within the airfoil and comprises a supply passage extending from the root toward the tip and fluidly coupled to the dovetail inlet passage at the root, a leading edge cooling passage extending along the leading edge, a cross-over rib extending between the pressure side and the suction side to separate the supply passage from the leading edge cooling passage, and impingement orifice extending through the cross-over rib fluidly coupling the leading edge cooling passage to the supply passage. The cross-over rib has an arcuate cross-section to provide thermal stress-relief for the cross-over rib, a thickened portion having an increase cross-section, with at least some of the impingement orifices extending through the thickened portion and where the thickened portion further comprises a flared portion.

### BRIEF DESCRIPTION OF THE DRAWINGS

In the drawings:
FIG. 1 is a schematic cross-sectional diagram of a gas turbine engine for an aircraft.
FIG. 2 is a perspective view of an engine component in the form of a turbine blade of the engine of FIG. 1 with cooling air inlet passages.
FIG. 3 is a cross-sectional view of the airfoil of FIG. 2.
FIG. 4 is a diagram view of a plurality of internal passages disposed within the cross-sectional view of the airfoil of FIG. 3.
FIG. 5 is an enlarged view of a leading edge of the airfoil of FIG. 4 including a concave arcuate cross-over rib.
FIG. 6 is an enlarged view the leading edge of the airfoil of FIG. 4 including a convex arcuate cross-over rib.
FIG. 7 is an enlarged view of the cross-over rib of FIG. 5 further comprising a thickened portion.
FIG. 8 is an enlarged view of the cross-over rib of FIG. 5 further comprising an offset impingement orifice.
FIG. 9 is an enlarged view of a cross-over rib of FIG. 7 comprising a flat side adjacent to a supply passage.
FIG. 10 is an enlarged view of the cross-over rib of FIG. 7 comprising flares defining the thickened portion.

### DETAILED DESCRIPTION

The described embodiments of the present invention are directed to a turbine blade, and in particular to cooling a turbine blade. For purposes of illustration, the present invention will be described with respect to a turbine blade for an aircraft gas turbine engine. It will be understood, however, that the invention is not so limited and can have general applicability in non-aircraft applications, such as other mobile applications and non-mobile industrial, commercial, and residential applications. It can also have application to airfoils, other than a blade, in a turbine engine, such as stationary vanes.

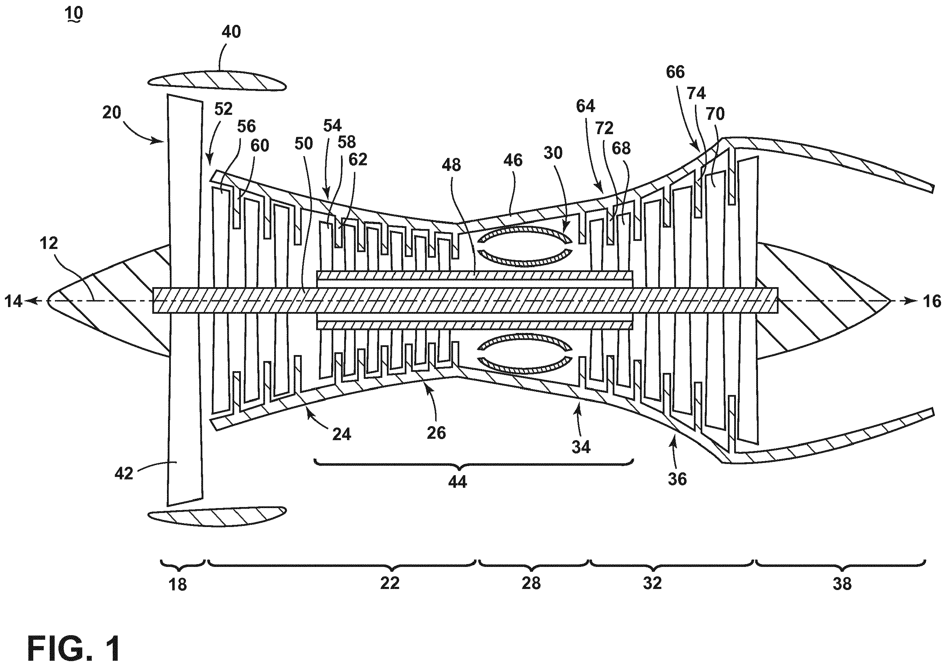

FIG. 1 is a schematic cross-sectional diagram of a gas turbine engine 10 for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38.

The fan section 18 includes a fan casing 40 surrounding the fan 20. The fan 20 includes a plurality of airfoils in the form of fan blades 42 disposed radially about the centerline 12. The HP compressor 26, the combustor 30, and the HP turbine 34 form a core 44 of the engine 10, which generates combustion gases. The core 44 is surrounded by core casing 46 which can be coupled with the fan casing 40.

A HP shaft or spool 48 disposed coaxially about the centerline 12 of the engine 10 drivingly connects the HP turbine 34 to the HP compressor 26. A LP shaft or spool 50, which is disposed coaxially about the centerline 12 of the engine 10 within the larger diameter annular HP spool 48, drivingly connects the LP turbine 36 to the LP compressor 24 and fan 20.

The LP compressor 24 and the HP compressor 26 respectively include a plurality of compressor stages 52, 54, in which a set of rotating airfoils in the form of compressor blades 56, 58 that rotate relative to a corresponding set of static airfoils in the form of compressor vanes 60, 62 (also called a nozzle) to compress or pressurize the stream of fluid passing through the stage. In a single compressor stage 52, 54, multiple compressor blades 56, 58 may be provided in a ring and may extend radially outwardly relative to the centerline 12, from a blade platform to a blade tip, while the corresponding static compressor vanes 60, 62 are positioned downstream of and adjacent to the rotating blades 56, 58. It is noted that the number of blades, vanes, and compressor stages shown in FIG. 1 were selected for illustrative purposes only, and that other numbers are possible.

The HP turbine 34 and the LP turbine 36 respectively include a plurality of turbine stages 64, 66, in which a set of rotating airfoils in the form of turbine blades 68, 70 that are rotated relative to a corresponding set of static airfoils in the form of turbine vanes 72, 74 (also called a nozzle) to extract energy from the stream of fluid passing through the stage. In a single turbine stage 64, 66, multiple turbine blades 68, 70 may be provided in a ring and may extend radially outwardly relative to the centerline 12, from a blade platform to a blade tip, while the corresponding static turbine vanes 72, 74 are positioned upstream of and adjacent to the rotating blades 68, 70. It is noted that the number of blades, vanes, and turbine stages shown in FIG. 1 were selected for illustrative purposes only, and that other numbers are possible.

In operation, the rotating fan 20 supplies ambient air to the LP compressor 24, which then supplies pressurized ambient air to the HP compressor 26, which further pressurizes the ambient air. The pressurized air from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

Some of the ambient air supplied by the fan 20 may bypass the engine core 44 and be used for cooling of portions, especially hot portions, of the engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid may be, but is not limited to, fluid discharged from the LP compressor 24 or the HP compressor 26.

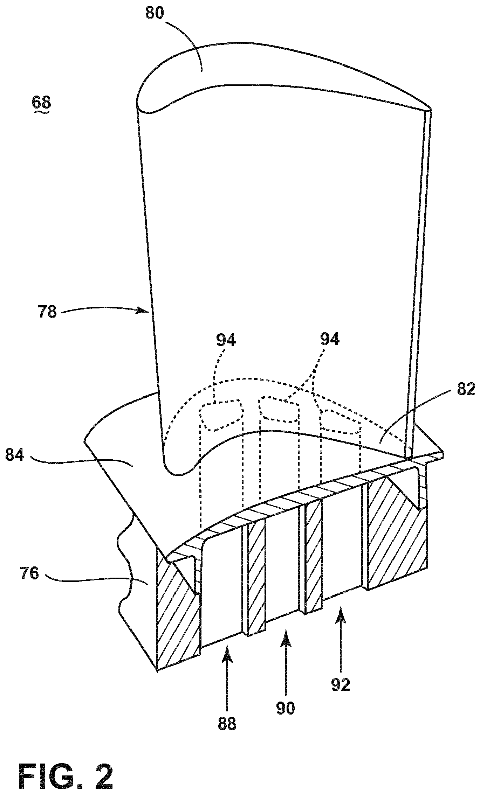

FIG. 2 is a perspective view of an engine component in the form of one of the turbine blades 68 of the engine 10 from FIG. 1. The turbine blade 68 includes a dovetail 76 and an airfoil 78. The airfoil 78 extends from a tip 80 to a root 82. The dovetail 76 further includes a platform 84 integral with the airfoil78 at the root 82, which helps to radially contain the turbine air flow. The dovetail 76 can be configured to mount to a turbine rotor disk on the engine 10. The dovetail 76 comprises at least one inlet passage, exemplarily shown as a first inlet passage 88, a second inlet passage 90, and a third inlet passage 92, each extending through the dovetail 76 to provide internal fluid communication with the airfoil 78 at a passage outlet 94. It should be appreciated that the dovetail 76 is shown in cross-section, such that the inlet passages 88, 90, 92 are housed within the body of the dovetail 76.

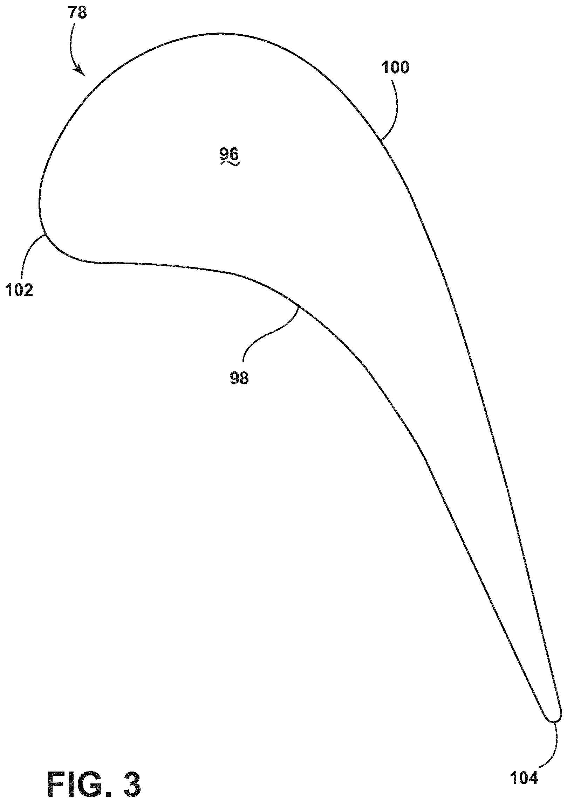

Turning to FIG. 3, the airfoil 78, shown in cross-section, has a concave-shaped pressure sidewall 98 and a convex-shaped suction sidewall 100 which are joined together to define an airfoil shape with a leading edge 102 and a trailing edge 104. The blade 68 rotates in a direction such that the pressure sidewall 98 follows the suction sidewall 100. Thus, as shown in FIG. 3, the airfoil 78 would rotate upward toward the top of the page.

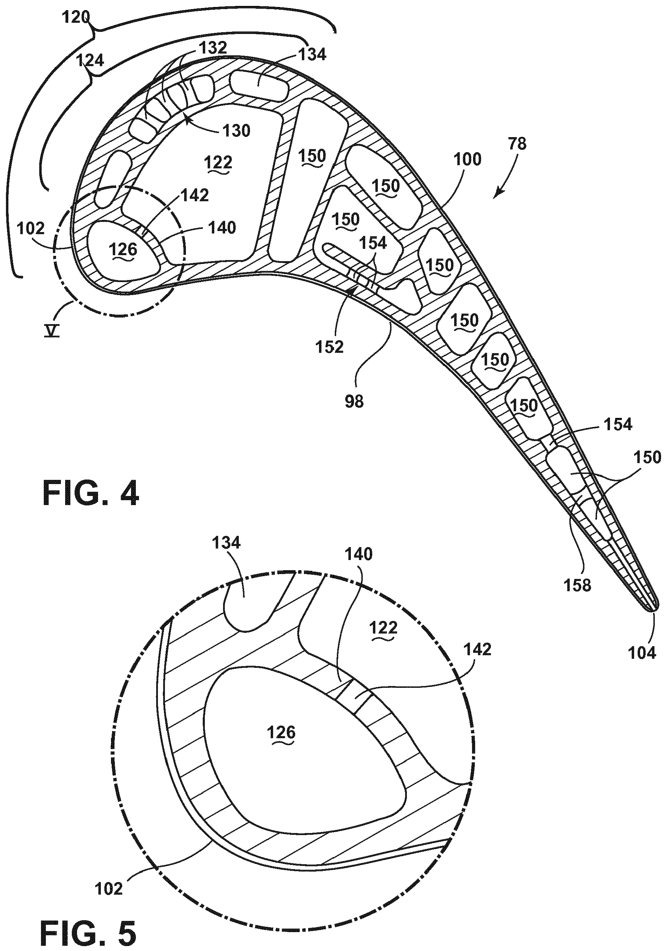

The airfoil 78 comprises a plurality of internal passages which can be arranged to form one or more cooling circuits dedicated to cool a particular portion of the blade 68. The passages and the corresponding cooling circuits are illustrated in FIG. 4, which is a cross-sectional view of the airfoil 78. It should be appreciated that the respective geometries of each individual passage within the airfoil 78 as shown is exemplary, each depicting one or more elements of passages forming cooling circuits and should not limit the airfoil to the geometries, dimensions, or positions as shown.

The cooling circuits can be defined by one or more passages extending radially within the airfoil 78. It should be appreciated that the passages can comprise one or more film holes which can provide fluid communication between the particular passage and the external surface of the airfoil 78, providing a film of cooling fluid along the external surface of the airfoil 78.

A cooling circuit shown as a leading edge cooling circuit 120 comprises a plurality of passages disposed within the interior of the airfoil 78. The leading edge cooling circuit 120 includes a supply passage 122, near wall cooling passages 124, and a leading edge cooling passage 126. The supply passage 122 extends from root 82 to tip 80, being in fluid communication with an inlet in the dovetail 76 such as the first inlet passage 88. The near wall cooling passages 124 are in fluid communication with the supply passage 122 and extend from the tip 80 toward the root 82. The near wall cooling passages 124 can further comprise additional passages including a plenum passage 130, extending from tip 80 to the root 82, with a plurality of pins or pin banks 132. The plenum passage 130, near the root 82, can be in fluid communication with one or more return passages 134 extending from the root 82 to the tip 80.

The leading edge cooling passage 126 is also in fluid communication with the supply passage 122, extending from root 82 to tip 80 and disposed adjacent to the leading edge 102. A cross-over rib 140 is disposed between and partially defines the supply passage 122 and the leading edge cooling passage 126. The cross-over rib 140 spans the interior 96 of the airfoil 78, extending between the pressure side and the suction side at the pressure sidewall 98 and the suction sidewall 100, respectively. The leading edge cooling passage 126 is in fluid communication with the supply passage 122 via one or more impingement orifices 142 disposed within the cross-over rib 140, extending from root 82 to tip 80.

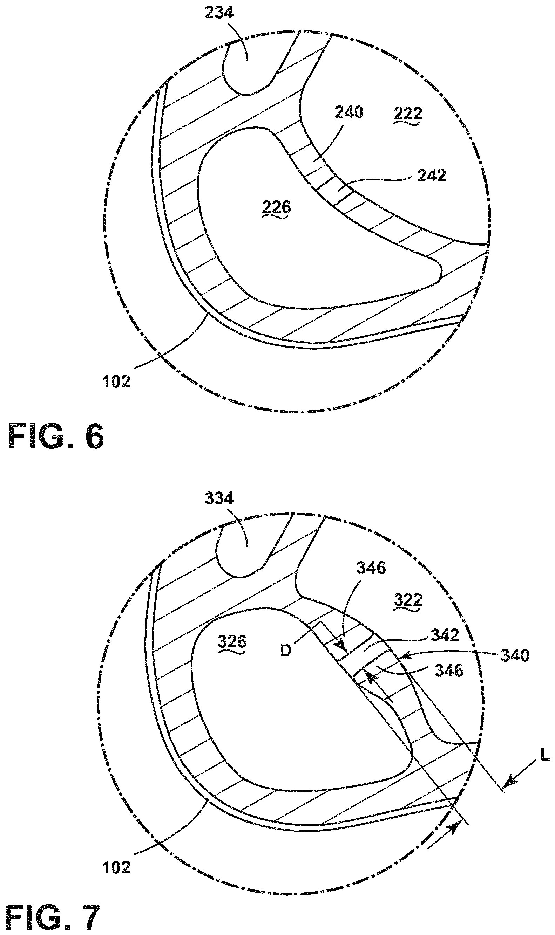

The interior 96 of the airfoil 78 can further comprise one or more additional cooling circuits defined by one or more internal passages 150, mesh passages 152, pin banks 154, slots 156, impingement orifices 158, and film holes, providing cooling fluid throughout the airfoil 78 or exhausting cooling fluid from the airfoil 78 to provide a cooling film to the exterior of the airfoil 78. The internal passages 150 and mesh passages 152 extend in a root 82 to tip 80 or tip 80 to root 82 direction and can be interconnected with one another such that one or more cooling circuits are defined. FIGS. 5 - 10 illustrate multiple separate implementations of the cross-over rib 142 disposed between the supply passage 122 and the leading edge cooling passage 126. It should be appreciated that the leading edge cooling circuit 120 can implement one or more of the cross-over ribs 140 along the span-wise length of the cross-over rib extending between the root 82 and the tip 80 of the airfoil 78.It should be understood that the leading edge cooling passages can comprise a plurality of film holes extending between the exterior of the airfoil 78 and the leading edge cooling passage 126, such that a cooling fluid can be provided as a cooling film to the exterior surface of the airfoil 78. FIGS. 6 - 10 can be substantially similar to FIG. 5. As such, each subsequent drawing will identify similar elements with similar numerals increased by a value of one-hundred with respect to the previous drawing.

Turning to FIG. 5, an enlarged view of the leading edge cooling passage 126 best illustrates the cross-sectional shape of the cross-over rib 140. The cross-over rib 140 comprises a concave, arcuate shape with respect to the leading edge cooling passage 126 having a substantially equivalent width defined along the cross-sectional arcuate length of the cross-over rib 140. The impingement orifice 142 fluidly couples the supply passage 122 to the leading edge cooling passage 126 along the radial, span-wise length of the cross-over rib 140, extending between the root 82 and the tip 80. The impingement orifice 142 can be located substantially central within the cross-over rib 140, relative to the extension of the cross-over rib 140 between the pressure sidewall 98 and the suction sidewall 100 or relative to the cross-over rib adjacent to the supply passage 122.

In FIG. 6, an enlarged view shows an alternate cross-sectional shape for the cross-over rib. A cross-over rib 240 comprises a convex shape with respect to a leading edge cooling passage 226. The width of the cross-over rib 240 remains constant over the cross-sectional length of the cross-over rib 240. A plurality of impingement orifices242, extending along the span-wise length of the cross-over rib 240 and can be located substantially central within the cross-over rib 140, relative to the extension of the cross-over rib 240 between the pressure sidewall 98 and the suction sidewall 100 or relative to the cross-over rib adjacent to a supply passage 222.

Turning to FIG. 7, a cross-over rib 340 comprises a substantially concave cross-sectional arcuate shape relative to a leading edge cooling passage 326. A plurality of impingement orifices 342 extend between a supply passage 322 and a leading edge cooling passage 326. The width of the cross-over rib 340 adjacent the impingement orifices 342 increases, such that two thickened portions 346 of the cross-over rib 340 are disposed on both sides of the impingement orifices 342. The thickened portions 346 are defined by a gradual, continuous increase in width of the cross-over rib 340 nearing the impingement orifices 342.

The impingement orifice can comprise a thickness defined by a ratio, L/D, of the length L of the impingement orifice 342 to the diameter D of the impingement orifice 342. The length L can be to total length of the impingement orifice 342, while the diameter D can be a metering diameter, such that it does not include a wider inlet or outlet radius defined within the length L. As such, the ratio (L/D) can be at least 2. The length L can be the total length being the same as the local rib width. A greater value for L/D can develop an improved flow development as well as more accurate directionality for the air flow passing through the impingement orifices.

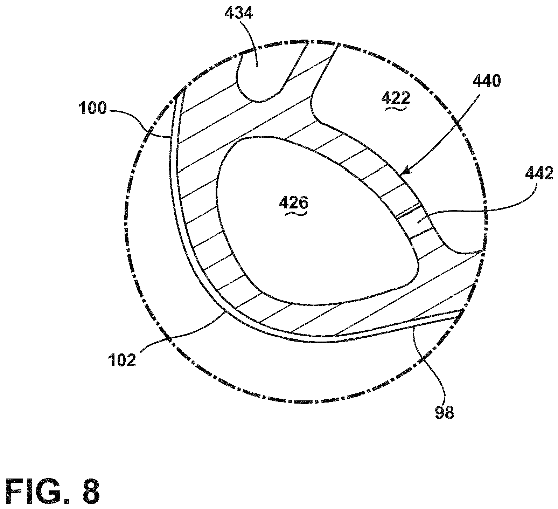

In FIG. 8, an impingement orifice442 is placed offset from the center of the cross-over rib 440, relative to the center of the cross-over rib 440 having respect to a length of the cross-over rib 440 extending between the pressure sidewall 98 and the suction sidewall 100, or a length of the cross-over rib 440 extending adjacent to a supply passage 422. It should be appreciated that the position of the impingement orifice442 can be anywhere along the cross-over rib 440 such that there is fluid communication between the supply passage 422 and a leading edge cooling passage 426.

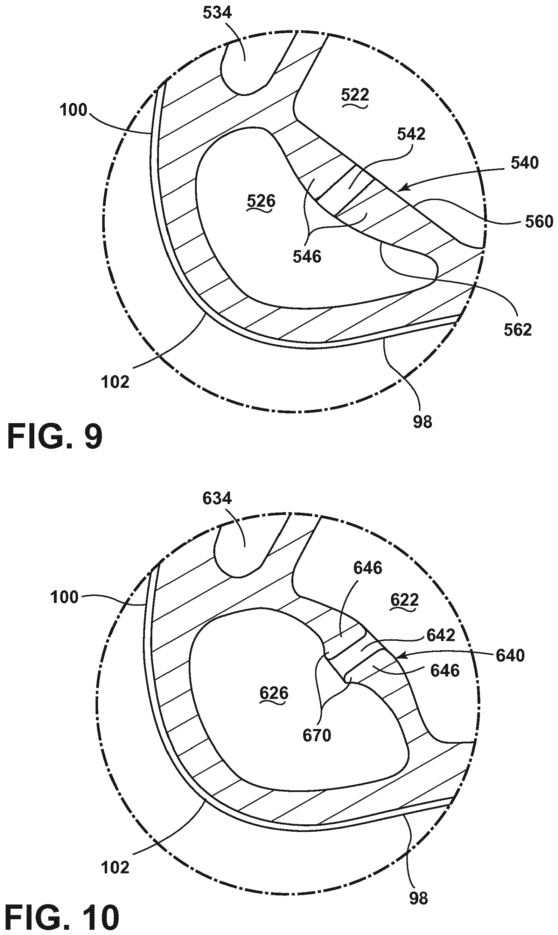

FIG. 9 illustrates a cross-over rib 540 defined by a flat aft surface 560, being adjacent to a supply passage 522, and a convex arcuate forward surface 562 with respect to a leading edge cooling passage 526. An impingement orifice542 is disposed in the widest portion of the cross-over rib 540, defined by the convex forward surface 562 that further defines a thickened portion 546 of the cross-over rib 540.

In FIG. 10, a cross-over rib 640 comprises a generally concave arcuate cross-section relative to a leading edge cooling passage 626. The cross-over rib 640 further comprises an impingement orifice642 defined by flares 670 disposed on the cross-over rib 640 adjacent the impingement orifice642. The flares 670 are arcuate extensions protruding into the leading edge cooling passage 626 at the impingement orifice642. The flares 670 can further define thickened portions defining a wider cross-sectional width for the cross-over rib 640 adjacent to the impingement orifice642 relative to the rest of the cross-over rib 640.

In FIGS. 5 - 10, a flow of cooling fluid can travel within the interior 96 of the airfoil 78 providing cooling to the airfoil 78 and to film holes which can exhaust the cooling fluid to the exterior of the airfoil 78 to form a cooling film along the exterior surface of the airfoil 78. Cooling fluid can be fed from an inlet passage, such as the first inlet passage 88 (FIG. 2), to the supply passage. Cooling fluid flows from supply passage, through the impingement orifice, to the leading edge cooling passage where the cooling fluid can be exhausted through the film holes.

It should be appreciated that an arcuate cross-section for the cross-over rib, being concave or convex with respect to the leading edge cooling passage, provides stress relief for the cross-over rib as well as associated components often affected by the stresses adjacent the leading edge of the airfoil.

It should be further appreciated that thickened portions of the cross-over rib provide for a thicker width for the impingement orifices providing a cooling fluid flow to the leading edge cooling passage. The width of the thickened portions at the impingement orifice can comprise a thickness defined by the ratio, L/D, of the length, L, of the impingement orifice to the diameter, D, of the impingement orifice. A greater value for L/D can develop an improved flow development as well as more accurate directionality for the air flow passing through the impingement orifices.

It should be further appreciated that the film holes as shown are exemplary. Placement, orientation, and number of film holes can vary from what is illustrated in FIG. 5. The film holes can further be located and oriented based upon the flow direction developed by the impingement orifice, such that a flow of cooling fluid is optimally provided to the exterior of the airfoil 78.

This written description uses examples to disclose the invention, including the best mode, and to enable any person skilled in the art to practice the invention, including making and using any devices or systems and performing any incorporated methods. The patentable scope of the invention is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. An airfoil for a gas turbine engine, the airfoil comprising:
   an outer surface defining a pressure side and a suction side extending axially between a leading edge and a trailing edge and extending radially between a root and a tip; and
   a cooling circuit located within the airfoil and comprising:
      a supply passage extending from the root toward the tip and fluidly coupled to the inlet passage at the root,
      a leading edge cooling passage extending along the leading edge,
      a cross-over rib extending between the pressure side and the suction side to separate the supply passage from the leading edge cooling passage, and
      impingement orifice extending through the cross-over rib fluidly coupling the leading edge cooling passage to the supply passage,
   wherein the cross-over rib has an arcuate cross-section to provide thermal stress-relief for the cross-over rib.
2. The airfoil according to clause 1, wherein the cross-over rib comprises a thickened portion having an increased cross section and at least some of the impingement orifices extend through the thickened portion.
3. The airfoil according to any preceding clause, wherein the thickened portion has a thickness such that a ratio (L/D) of a length, L, of the impingement orifices to the diameter, D, of the impingement orifice is at least 2.
4. The airfoil according to any preceding clause, wherein the cross-over rib further defines at least one flared portion adjacent the impingement orifice.
5. The airfoil according to any preceding clause, wherein the flared portions further define the thickened portion.
6. The airfoil according to any preceding clause, wherein less than ten percent of the cross-over rib cross-sectional profile is parallel to the leading edge cross-sectional profile.
7. The airfoil according to any preceding clause, wherein less than ten percent of the cross-over rib cross-sectional profile is straight.
8. The airfoil according to any preceding clause, wherein at least some of the impingement orifices are located at a center of the cross-over rib.
9. The airfoil according to any preceding clause, wherein at least some of the impingement orifices are located nearer to a junction of the cross-over rib and the outer surface than to a center of the cross-over rib.
10. A blade for a gas turbine engine having a turbine rotor disk, the blade comprising:
   a dovetail having at least one cooling air inlet passage and configured to mount to the turbine rotor disk;
   an airfoil extending radially from the dovetail and having an outer surface defining a pressure side and a suction side extending axially between a leading edge and a trailing edge and extending radially between a root and a tip, with the root being adjacent the dovetail; and
   a cooling circuit located within the airfoil and comprising:
      a supply passage extending from the root toward the tip and fluidly coupled to the cooling air inlet passage at the root,
      a leading edge cooling passage extending along the leading edge,
      a cross-over rib extending between the pressure side and the suction side to separate the supply passage from the leading edge cooling passage, and
      impingement orifices extending through the cross-over rib fluidly coupling the leading edge cooling passage to the supply passage,
   wherein the cross-over rib has an arcuate cross-section to provide thermal stress-relief for the cross-over rib and a thickened portion having an increased cross-section, with at least some of the impingement orifices extending through the thickened portion.
11. The blade according to any preceding clause, wherein the thickened portion has a thickness such that a ratio (L/D) of a length, L, of the impingement orifice to the diameter, D, of the impingement orifice is at least 2.
12. The blade according to any preceding clause, wherein the cross-over rib comprises a flared portion adjacent the impingement orifices.
13. The blade according to any preceding clause, wherein the flared portion is adjacent the leading edge cooling passage.
14. The blade according to any preceding clause, wherein the no portion of the cross-over rib cross-sectional profile is parallel to the leading edge cross-sectional profile.
15. The blade according to any preceding clause, wherein no portion of the cross-over rib cross-sectional profile is straight.
16. The blade according to any preceding clause, wherein at least some of the impingement orifices are located at a center of the cross-over rib.
17. The blade according to any preceding clause, wherein at least some of the impingement orifices are located nearer to a junction of the cross-over rib and the outer surface than to a center of the cross-over rib.
18. An airfoil for a gas turbine engine, the airfoil comprising:
   an outer surface defining a pressure side and a suction side extending axially between a leading edge and a trailing edge and extending radially between a root and a tip, with the root being adjacent the dovetail; and
   a cooling circuit located within the airfoil and comprising:
      a supply passage extending from the root toward the tip and fluidly coupled to the cooling air inlet passage at the root,
      a leading edge cooling passage extending along the leading edge,
      a cross-over rib extending between the pressure side and the suction side to separate the supply passage from the leading edge cooling passage, and
      impingement orifices extending through the cross-over rib fluidly coupling the leading edge cooling passage to the supply passage,
   wherein the cross-over rib has an arcuate cross-section to provide thermal stress-relief for the cross-over rib, a thickened portion having an increased cross section, with at least some of the impingement orifices extend through the thickened portion and where the thickened portion further comprises a flared portion.
19. The airfoil according to any preceding clause, wherein the thickened portion has a thickness such that a ratio (L/D) of a length, L, of the impingement orifices to the diameter, D, of the impingement is at least 2.
20. The airfoil according to any preceding clause, wherein no portion of the cross-over rib cross-sectional profile is parallel to the leading edge cross-sectional profile.

## Claims

1. An airfoil (78) for a gas turbine engine (10), the airfoil (78) comprising:
an outer surface defining a pressure side (98) and a suction side (100) extending axially between a leading edge (102) and a trailing edge (104) and extending radially between a root (82) and a tip (80); and
a cooling circuit (120) located within the airfoil (78) and comprising:
a supply passage (122) extending from the root (82) toward the tip (80) and fluidly coupled to the inlet passage (88) at the root (82),
a leading edge cooling passage (126) extending along the leading edge (102),
a cross-over rib (140) extending between the pressure side (98) and the suction side (100) to separate the supply passage (122) from the leading edge cooling passage (126), and
impingement orifice (142) extending through the cross-over rib (140) fluidly coupling the leading edge cooling passage (126) to the supply passage (122),
wherein the cross-over rib (140) has an arcuate cross-section to provide thermal stress-relief for the cross-over rib (140).

2. The airfoil (78) according to claim 1, wherein the cross-over rib (140) comprises a thickened portion (346) having an increased cross section and at least some of the impingement orifices (142) extend through the thickened portion (346).

3. The airfoil (78) according to claim 2, wherein the thickened portion (346) has a thickness such that a ratio (L/D) of a length, L, of the impingement orifices (142) to the diameter, D, of the impingement orifice (142) is at least 2.

4. The airfoil (78) according to either of claim 2 or 3, wherein the cross-over rib (140) further defines at least one flared portion (670) adjacent the impingement orifice (142).

5. The airfoil (78) according to claim 4, wherein the flared portions (670) further define the thickened portion (346).

6. The airfoil (78) according to any preceding claim, wherein less than ten percent of the cross-over rib (140) cross-sectional profile is parallel to the leading edge (102) cross-sectional profile.

7. The airfoil (78) according to any preceding claim, wherein less than ten percent of the cross-over rib (140) cross-sectional profile is straight.

8. The airfoil (78) according to any preceding claim, wherein at least some of the impingement orifices (142) are located at a center of the cross-over rib (140).

9. The airfoil (78) according to any preceding claim, wherein at least some of the impingement orifices (142) are located nearer to a junction of the cross-over rib (140) and the outer surface than to a center of the cross-over rib (140).

10. The airfoil (78) according to any preceding claim, wherein the airfoil (78) comprises one of a blade (56, 58, 68, 70) or a vane for a compressor (22) or a turbine (32).

11. A blade for a gas turbine engine (10) having a turbine rotor disk, the blade comprising:
a dovetail having at least one cooling air inlet passage and configured to mount to the turbine rotor disk;
an airfoil (78) according to any of the preceding claims;
the airfoil (78) extending radially from the dovetail, with the root being adjacent the dovetail; and
wherein the cross-over rib (140) further has a thickened portion (346) having an increased cross-section, with at least some of the impingement orifices (142) extending through the thickened portion.
